**Europäisches Patentamt**

(19) **European Patent Office**

**Office européen des brevets**

(11) Veröffentlichungsnummer : **0 066 532 B2**

(12) # NEUE EUROPÄISCHE PATENTSCHRIFT

(45) Veröffentlichungstag der neuen Patentschrift :
**19.06.91 Patentblatt 91/25**

(21) Anmeldenummer : **82730048.4**

(22) Anmeldetag : **30.04.82**

(51) Int. Cl.⁵ : **G05B 15/02, G05B 11/01, H05K 7/02**

(54) **Elektronisches Regelgerät.**

(30) Priorität : **29.05.81 DE 3122037**

(43) Veröffentlichungstag der Anmeldung :
**08.12.82 Patentblatt 82/49**

(45) Bekanntmachung des Hinweises auf die Patenterteilung :
**06.08.86 Patentblatt 86/32**

(45) Bekanntmachung des Hinweises auf die Entscheidung über den Einspruch :
**19.06.91 Patentblatt 91/25**

(84) Benannte Vertragsstaaten :
**AT BE CH DE FR GB LI NL SE**

(56) Entgegenhaltungen :
DE-A- 2 109 922
DE-A- 2 915 528
DE-A- 2 950 979
FR-A- 2 245 148
GB-A- 2 079 492
REGELUNGSTECHNISCHE PRAXIS, Band 22, Nr. 11, November 1980, Seiten 408 bis 412, München (DE); K.F.FRÜH: "Ein dezentrales Prozessautomatisierungssystem mit Alternativen"
REGELUNGSTECHNISCHE PRAXIS, Band 22, Nr. 4, April 1980, Seiten 109 bis 114, München (DE); H. WÖLFEL: "MESUCORA '79: Neue digitale Prozessautomatisierungssysteme"
ADVANCES IN INSTRUMENTATION, Band 29, Teil 4, 1974, Seiten 802-1 bis 802-7, Pittsburgh (USA); R.G.HUNDLEY et al.: "Keyboard entry and digital display 3 mode process controller"
Gerätebeschreibung:"580 Series Microprocessor controller for process heating applications", Barber Colman Company, USA, Sept. 1979, Seiten 1 - 19
Zeitschrift "Control Engineering", March 1981, "Data Loggers Show Two Faces - Data Acquisition and PID Control", Nikita Andreiev, Seiten 84 -88
Gerätebeschreibung: "Der energiesparende Heizungsregler SM für Ein- und Zweifamilienhäuser", Siemens AG, Bestellnummer E 684/1037

(56) Entgegenhaltungen :
Preisliste MP 36 Januar 81
"Automatisierungssystem SICLIMAT für Heizungs-, Lüftungs- und Klimaanlagen" mit der Preisliste des Heizungsreglers SM auf Seite 13, Siemens AG, Deckblatt und Seite 13
Zeitschrift Elektronic 1980, Heft 6, "Einsatz von Mikrorechnern in der Regelungstechnik", R. Isermann, Seiten 79-84
Zeitschrift "Electronic Design", Nr. 11, 24. Mai 1979, "Focus on keyboards: the real challenge is 'interfacing' the computer user to the right one", Dick Hackmeister, Seiten 169-175
Gerätebeschreibung "560 Process Controller", Barber Colman Company, USA, Sept. 1979, Titelblatt und Seiten 1-13
Gerätebeschreibung "Speicherprogrammierbare Steuerungen MELSEC F", Firma Mitsubishi Electric Europa GmbH, Seiten 1-16
Regelungstechnische Praxis, Band 22, Nr. 4, April 1980, München, H. Wölfel: "MESUCORA '79: Neue digitale Prozessautomatisierungssysteme"Seiten 109-114

(73) Patentinhaber : Siemens Aktiengesellschaft
Wittelsbacherplatz 2
W-8000 München 2 (DE)

(72) Erfinder : Diepold-Scharnitzky, Rudolf
Waldenser Strasse 33
W-1000 Berlin 21 (DE)
Erfinder : Lesche, Wolfgang, Dipl.-Ing.
Wildbergweg 13
W-1000 Berlin 37 (DE)
Erfinder : Rindfleisch, Volker
Lichterfelder Ring 165
W-1000 Berlin 45 (DE)

**Beschreibung**

Die Erfindung bezieht sich auf ein elektronisches Regelgerät mit einer Frontplatteneinheit, an der Bedienelemente angeordnet sind, die einer inkrementellen Änderung von Prozessgrössen im Regelgerät, einer schrittweisen Anwahl eines Regelparameters im elektronischen Regelgerät und einer inkrementellen Änderung der Werte der Regelparameter dienen, und die Anzeigevorrichtungen aufweist, mit denen die jeweiligen Werte der Prozessgrössen, der jeweils angewählte Regelparameter und der Wert des jeweils angewählten Regelparameters angezeigt werden können.

Bei einem bekannten elektronischen Regelgerät dieser Art (Gerätebeschreibung « Microprocessor controller for process heating applications, » Seiten 1 bis 19, Barber Colman Company, USA, Sept. 1979) ist es möglich, einerseits die Prozessgrössen eines Reglers – z.B. die Sollgrösse – mittels Bedienelementen auf einer Frontplatteneinheit inkrementell zu verändern und andererseits auch die Werte der Regelparameter – z.B. Regelverstärkung und Zeitkonstanten – ebenfalls inkrementell zu verändern. Eine Anzeigevorrichtung mit lichtemittierenden Dioden (LED) ist zur dezimalen Anzeige der Werte der Regelgrössen bzw. der Regelparameter geeignet ; mit einer anderen Anzeigevorrichtung können z.B. jeweils angewählte Regelparameter mittels in einer Reihe angeordneter LED-Elemente gekennzeichnet werden. Die Frontplatteneinheit dieses bekannten Regelgerätes mit ihren Schaltungsteilen ist ein fester Bestandteil des gesamten Schaltungsaufbaus, so dass diese Frontplatteneinheit und das Gehäuse eine Einheit bilden. Veränderungen der Werte der Regelparameter und eine Kontrolle der Prozessgrössen können jederzeit an der Frontplatteneinheit vorgenommen werden, wodurch auch Fehlbedienungen durch Unbefugte nicht ausgeschlossen sind.

Der Erfindung liegt die Aufgabe zugrunde, ein elektronisches Regelgerät zu schaffen, bei dem eine Sicherung vor Fehlbedienungen unter Beibehaltung der Funktionstüchtigkeit des Regelgerätes mit vergleichsweise geringem Aufwand erreichbar ist.

Zur Lösung dieser Aufgabe ist bei einem elektronischen Regelgerät der eingangs angegebenen Art erfindungsgemäß die Frontplatteneinheit mittels einer Steckverbindung lösbar am Gehäuse des elektronischen Regelgerätes gehalten, wobei an der Frontplatteneinheit ein Mikroprozessorbaustein (Slave) angebracht ist, der mit den Bedienelementen und den Anzeigevorrichtungen elektrisch fest verbunden, dieser Mikroprozessorbaustein (Slave) ist über einen Steckkontakt an der Frontplatteneinheit und einen weiteren Steckkontakt mit einem weiteren Mikroprozessorbaustein (Master) im Gehäuse des elektronischen Regelgerätes verbindbar und im Gehäuse des elektronischen Regelgerätes sind zusammen mit dem weiteren Mikroprozessorbaustein (Master) alle zur Regelung der Prozessgrößen notwendigen Bauelemente angeordnet.

Der an der Frontplatteneinheit angebrachte eine Mikroprozessorbaustein (Slave) steuert die Anzeigenvorrichtungen derart, dass sie die Werte der Prozessgrössen oder des angewählten Regelparameters analog bzw. digital anzeigen. Ferner werden die von den Bedienelementen erzeugten Signale zur inkrementellen Vergrösserung oder Verminderung eines der Werte der Prozessgrössen oder der Regelparameter von diesem Mikroprozessorbaustein (Slave) in geeignete digitale Signale umgeformt und über die Steckverbindung den elektrischen Schaltkreisen im Innern des Regelgeräts zur Verfügung gestellt.

Vorteilhaft ist das erfindungsgemässe elektronische Regelgerät infolge der Schaffung einer kompakten Frontplatteneinheit, die vom Gehäuse des elektronischen Regelgerätes abnehmbar ist, ohne die Funktion des elektronischen Regelgerätes beim Regelvorgang zu beeinflussen. Alle den eigentlichen Regelvorgang im elektronischen Regelgerät betreffenden Funktionen werden mittels des weiteren Mikroprozessorbaustein (Master) ausgeführt ; dieser weitere Mikroprozessorbaustein ist fest im Gehäuse angeordnet. Dadurch ergibt sich die vorteilhafte Möglichkeit, dass mittels des einen Mikroprozessorbausteins alle der Frontplatteneinheit zugeordneten Funktionen ausgeführt werden und sich somit zwei selbständige Baueinheiten ergeben.

Durch Schaffung der kompakten selbständigen Frontplatteneinheit, die jeweils an ein Gehäuse eines elektronischen Regelgerätes ansteckbar ist, ist es möglich, mehrere elektronische Regelgeräte in Verbindung mit nur einer einzigen Frontplatteneinheit zu betreiben. Nur für den Zeitraum, in dem eine Anderung der Regelparameter durch Service-Personal oder eine Kontrolle des Verlaufs der Prozessgrössen vorgenommen werden soll, muss somit die Frontplatteneinheit auf das Gehäuse des entsprechenden Regelgerätes aufgesteckt werden und steht nach Beendigung dieser Arbeiten für ein anderes elektronisches Regelgerät zur Verfügung. Hierdurch ergibt sich also eine erhebliche Einsparung beim gerätetechnischen Aufwand, insbesondere bei einem Betrieb mehrerer Regelgeräte, und zugleich eine Sicherung der elektronischen Regelgeräte vor Parameteränderungen durch Unbefugte.

Weiterhin ist es in vorteilhafter Weise möglich, die Frontplatteneinheit mit einem Druckwerk zum Ausdrucken der Werte der Prozessgrössen bzw. der Regelparameter und mit einem Datenträger z.B. Bandspeicher – zum Einlesen vorgegebener Parameterwerte zu kombinieren. Somit können auch umfangreiche Service-Massnahmen auf einfache Weise mit einer einzigen Frontplatteneinheit durchgeführt werden.

Es ist zwar aus der Siemens-Druckschrift "Der energiesparende Heizungsregler SM", Bestell-Nr. E 684/1037 ein Regler bekannt, bei dem in einem von einem Gehäuse abnehmbaren Frontteil Anzeige-und Bedienelemente sowie ein Mikroprozessor untergebracht sind, jedoch handelt es sich hierbei um einen Heizungsregler, bei dem als einziger Regelparameter die Heizkurve einstellbar ist. Im Gehäuse des bekannten Gerätes ist überdies lediglich das Stellgerät angeordnet, so daß stets das Frontteil mit dem Gehäuse verbunden werden muß, um ein funktionierendes Regelgerät zu erhalten. Es ist dadurch die Möglichkeit gegeben, das Frontteil und das Stellgerät räumlich getrennt anzuordnen.

Ferner ist aus "Regeltechnische Praxis" 1980, Heft 4, Seite 109 ff. eine Anordnung bekannt, in der jeder Regelbaugruppe räumlich entfernt jeweils ein Leitgerät zugeordnet ist. Mit einer über eine Verbindungsleitung an die Regelbaugruppen anschließbaren Taschenkleinkonsole können Regeleinstellparameter eingegeben werden.

Es ist auch ein Regelgerät bekannt (GB-A 2 079 402), das ein Gehäuse und eine mit diesem vereinigte Frontplatteneinheit mit Anzeige- und Bedienelementen aufweist. Das Regelgerät kann durch einen über eine Verbindungsleitung anschließbaren Programmierer programmiert werden.

Darüber hinaus ist ein als Regelgerät benutzter Data Logger bekannt ("Control Engineering" März 1981, Seiten 84 bis 88), bei dem die Bedienelemente auf einem Keyboard angeordnet sind, das über eine Anschlußleitung mit dem Data Logger verbindbar ist. Als Anzeigeeinrichtung dient ein Display in der Fronseite des Data Loggers.

Bei dem erfindungsgemäßen Regelgerät ist es besonders vorteilhaft, wenn die Eingänge und Ausgänge des weiteren Mikroprozessorbausteins (Master) mit einem Speicherbaustein elektrisch verbunden sind, in den die elektrischen Signale dieses Mikroprozessorbausteins eingelesen werden, wobei der Speicherinhalt dieses Speicherbausteins auch bei Spannungsausfall erhalten bleibt. Mit dieser Ausführungsform ist auf einfache Weise sichergestellt, dass auch bei einem unerwünschten Ausfall der Versorgungsspannung die Einstellungen der Regelparameter erhalten bleiben und somit bei der Wiederinbetriebnahme eine erneute Eingabe von Werten unterbleiben kann.

Besonders vorteilhaft ist weiterhin, wenn im Gehäuse des elektronischen Regelgerätes zusammen mit dem weiteren Mikroprozessorbaustein (Master) alle zur Regelung der Prozessgrössen notwendigen Bauelemente angeordnet sind und wenn die Steckkontakte in nur einer solchen Anzahl vorhanden sind, dass Verbindungen zur Herstellung einer Stromversorgung der Frontplatteneinheit und ein serieller Datenaustausch zwischen dem einen Mikroprozessorbaustein (Slave) und dem weiteren Mikroprozessorbaustein (Master) möglich sind.

Durch die relativ geringe Anzahl von notwendigen Steckkontakten kann auf besonders einfache Weise eine elektrische Verbindung zwischen der Frontplatteneinheit und den Schaltungselementen im Gehäuse des Regelgerätes ohne aufwendige mechanische Bauelemente hergestellt werden.

Es sind somit nur elektrische Verbindungen zwischen dem einen Mikroprozessorbaustein (Slave) und dem weiteren Mikroprozessorbaustein (Master) herzustellen. Da der Datenaustausch zwischen diesen beiden Mikroprozessorbausteinen in Form von seriellen digitalen Impulsen erfolgt, sind nur wenige Verbindungsleitungen für den Datenaustausch und weitere Verbindungsleitungen für eine Taktimpulsübertragung und die Spannungsversorgung des einen Mikroprozessorbausteins (Slave) notwendig.

Eine besonders übersichtliche Anzeige der Prozessgrössen und der Regelparameter ergibt sich auf einfache Weise, wenn eine Reihe benachbart angeordneter Anzeigeelemente als Bestandteile einer Anzeigevorrichtung vorhanden ist, die bei entsprechender Ansteuerung ein Lichtsignal abgeben, wobei die Reihe zur Kennzeichnung des jeweils angewählten Regelparameters dient und weitere Reihen von Anzeigeelementen vorhanden sind, mit denen der Wert des jeweils angewählten Regelparameters und die Werte der Prozessgrössen angezeigt werden. Möglich ist auch die Zahl der Anzeigevorrichtungen und der Bedienelemente dadurch zu begrenzen, dass mittels Umschalter eine Anzeigevorrichtung und ein Paar Bedienelemente entweder zur Anzeige oder Veränderung einer Prozessgrösse oder zur Anzeige oder Veränderung eines Regelparameters herangezogen werden können.

Die Ansteuerung dieser einzelnen Anzeigeelemente, die eigene Steuerleitungen benötigen, erfolgt auf einfache Weise durch entsprechende Steuerausgänge des Mikroprozessorbausteines (Slave), wobei die Anzahl der jeweils angesteuerten Anzeigeelemnle dem jeweiligen Wert der Prozessgrösse bzw. des Regelparameters entsprechen. Die Anzeigeelemente können Licht emittierende Dioden bzw. Fluoreszenzelemente sein.

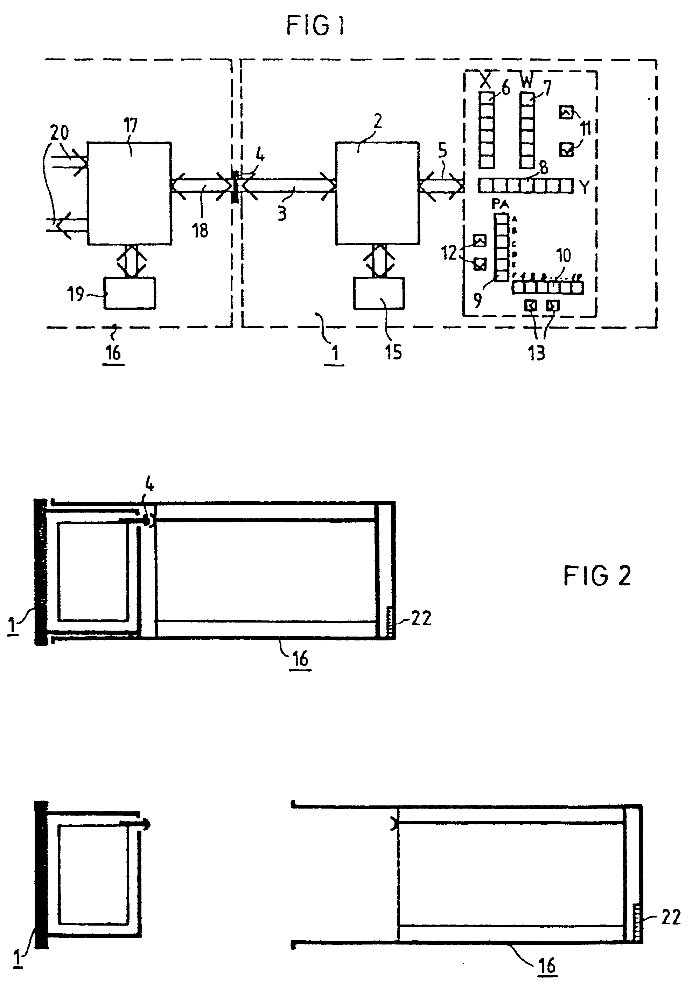

Die Erfindung wird anhand der Figuren erläutert, wobei Fig. 1 ein Prinzipschaltbild eines Ausführungsbeispiels des erfindungsgemässen Regelgerätes mit der Frontplatteneinheit und mit Teilen der Schaltungsanordnung im Gehäuse des Regelgerätes und Fig. 2 den mechanischen Aufbau des Regelgerätes mit der Frontplatteneinheit im zusammengefügten und im getrennten Zustand darstellt.

Die gestrichelt dargestellte Frontplatteneinheit 1 enthält einen Mikroprozessorbaustein 2 (Slave), der über Verbindungsleitungen 3 an Steckkontakte einer Steckverbindung 4 an der Rückseite der Frontplatteneinheit 1 angeschlossen ist. Über eine weitere Verbindungsleitung 5 ist der eine Mikroprozessorbaustein 2 mit den Anzeigeelementen der Anzeigevorrichtungen 6 bis 10 sowie mit Bedienelementen 11, 12 und 13 verbunden, die vorn auf der Frontplatteneinheit 1 angeordnet sind. Ferner ist ein Speicherbaustein 15 an den Mikroprozessorbaustein 2 angeschlossen, in dem die elektrischen Signale am Ein- und Ausgang dieses Mikroprozessorbausteins 2 gespeichert werden. Ein Gehäuse 16 des elektronischen Regelgerätes, das durch eine weitere strichlierte Linie angedeutet ist, enthält einen weiteren Mikroprozessorbaustein 17 (Master), der über Verbindungsleitungen 18 mit den anderen Steckkontakten der Steckverbindung 4 verbunden ist. Ein weiterer Speicherbaustein 19 dient der Speicherung der von diesem Mikroprozessorbaustein 17 erzeugten Signale ; der Speicherinhalt dieses Speicherbaustein 19 bleibt bei Spannungsausfall erhalten.

Über Ein- und Ausgabekanäle 20 ist der Mikroprozessorbaustein 17 mit Feldsignalen beaufschlagt, die aus dem zu regelnden Prozess – z.B. eine Temperaturregelung – hergeleitet sind. Zur Anzeige der Prozessgrössen stellt der Mikroprozessorbaustein 17 serielle elektrische Signale über die Verbindungsleitungen 18, die Steckverbindung 4 und die Verbindungsleitungen 3 dem einen Mikroprozessorbaustein 2 (Slave) zur Verfügung. Dieser Mikroprozessorbaustein 2 formt die seriellen elektrischen Signale in entsprechende Steuersignale für die Anzeigevorrichtungen 6 bis 10 um. Die Anzeigevorrichtungen 6, 8 und 10 bestehen bei dem dargestellten Ausführungsbeispiel aus aneinandergereihten lichtemittierenden Dioden, die bei entsprechender Ansteuerung eine zusammenhängende Lichtsäule bilden, welche dem Wert der anzuzeigenden Grösse äquivalent ist. Die Anzeigevorrichtung 9 dient der Kennzeichnung des jeweils angewählten Regelparameters ; hier ist jeweils nur die Ansteuerung eines Anzeigeelementes notwendig, das zur Kennzeichnung des Regelparameters im daneben angeordneten Schriftfeld notwendig ist.

Wenn z.B. der Wert einer Prozessgrösse – z.B. die Führungsgrösse W am der Anzeigevorrichtung 7 – verändert werden soll, so geschieht dies durch Betätigen der entsprechenden Bedienelemente 11, mit denen eine inkrementelle Vergrösserung oder Verminderung dieses Wertes erreicht wird. Eine Änderung des Wertes eines der Regelparameter wird mittels der Bedienelemente 13 bewirkt. Eine Änderung der Anzahl eines Regelparameters wird mittels der Bedienelemente 12 durchgeführt. Die Bedienelemente sind über parallele Steuerleitungen als Bestandteil der Verbindungsleitung 5 mit dem einen Mikroprozessorbaustein 2 (Slave) verbunden, der die Steuersignale der Bedienelemente in entsprechende serielle Signale umwandelt. Diese seriellen Signale werden über die Verbindungsleitungen 3, die Steckverbindung 4 und die Verbindungsleitung 18 dem weiteren Mikroprozessorbaustein 17 (Master) zur Verfügung gestellt. Somit kann hier eine Veränderung von Regelparametern bzw. Prozessgrössen an der Frontplatteneinheit durchgeführt werden. Der weitere Mikroprozessorbaustein 17 (Master) im Gehäuse 16 des Regelgerätes ist so aufgebaut, dass er bei Entfernung der Frontplatteneinheit 1 zur Aufrechterhaltung aller Regelfunktionen in der Lage ist. Eine Veränderung der Regelparameter, z.B. durch Unbefugte, ist bei entfernter Frontplatteneinheit jedoch weitgehend verhindert.

In der Fig. 2 ist ein Querschnitt durch den mechanischen Aufbau des Gehäuses 16 des Regelgerätes und ein Querschnitt durch den mechanischen Aufbau der Frontplatteneinheit 1 gezeigt. Im oberen Teil der Fig. 2 befindet sich die Frontplatteneinheit 1 im Gehäuse 16 des elektronischen Regelgerätes ; die Schaltungsteile der Frontplatteneinheit 1 sind über die Steckverbindung 4 mit den anderen Schaltungsteilen des Regelgerätes im Gehäuse 16 verbunden. Über eine weitere Steckverbindung 22 an der Rückseite des elektronischen Regelgerätes werden die zur Regelung notwendigen Feldsignale dem elektronischen Regelgerät zugeführt.

Der untere Teil der Fig. 2 zeigt einen Querschnitt durch den mechanischen Aufbau des Regelgerätes bei hinausgezogener Frontplatteneinheit 1. Nach Entfernen der Frontplatteneinheit 1 kann die frontseitige Öffnung des Gehäuses 16 eventuell durch eine Blindplatte verschlossen und somit z.B. vor Feuchtigkeit geschützt werden. Es ist darüber hinaus aber möglich, durch die frontseitige Öffnung eventuell zusätzliche Schaltungsplatten in das Gehäuse einzufügen. Mit diesen zusätzlichen Schaltungsplatten können z.B. bestimmte vorgegebene Werte der Prozessgrössen im Servicefall eingestellt werden, ohne eine dauerhafte Veränderung des elektronischen Regelgerätes zu bewirken.

**Ansprüche**

1. Elektronisches Regelgerät mit
   a) einer Frontplatteneinheit (1), an der
   b) Bedienelemente (11-13) angeordnet sind, die
      b1) einer inkrementellen Änderung von Prozeßgrößen im Regelgerät,
      b2) einer schrittweisen Anwahl eines Regelparameters im elektronischen Regelgerät und
      b3) einer inkrementellen Änderung der Werte der Regelparameter dienen, und die
   c) Anzeigevorrichtungen (6-10) aufweist, mit denen
      c1) die jeweiligen Werte der Prozeßgrößen,
      c2) der jeweils angewählte Regelparameter und
      c3) der Wert des jeweils angewählten Regelparameters angezeigt werden können, **dadurch gekennzeichnet, daß**
   d) die Frontplatteneinheit (1) mittels einer Steckverbindung (4) lösbar am Gehäuse (16) des elektronischen Regelgerätes gehalten ist, wobei

d1) an der Frontplatteneinheit (1) ein Mikroprozessorbaustein (2) (Slave) angebracht ist, der mit den Bedienelementen (11 bis 13) und den Anzeigevorrichtungen (6 bis 10) elektrisch fest verbunden ist,

d2) dieser Mikroprozessorbaustein (2) (Slave) über einen Steckkontakt an der Frontplatteneinheit (1) und einen weiteren Steckkontakt mit einem weiteren Mikroprozessorbaustein (17) (Master) im Gehäuse (16) des elektronischen Regelgerätes verbindbar ist und

d3) im Gehäuse (16) des elektronischen Regelgerätes zusammen mit dem weiteren Mikroprozessorbaustein (17) (Master) alle zur Regelung der Prozeßgrößen notwendigen Bauelemente angeordnet sind (Fig. 1).

2. Regelgerät nach Anspruch 1, **dadurch gekennzeichnet, daß**

e) die Eingänge und Ausgänge des weiteren Mikroprozessorbausteins (17) (Master) mit einem Speicherbaustein (19) elektrisch verbunden sind, in den

e1) die elektrischen Signale dieses Mikroprozessorbausteins (17) (Master) eingelesen werden, wobei

e2) der Speicherinhalt dieses Speicherbausteins (15) auch bei Spannungsausfall erhalten bleibt.

3. Elektronisches Regelgerät nach Anspruch 1, **dadurch gekennzeichnet, daß**

f) die Steckkontakte nur in einer solchen Anzahl vorhanden sind, daß Verbindungen zur Herstellung einer Stromversorgung der Frontplatteneinheit (1) und ein serieller Datenaustausch zwischen dem einen Mikroprozessorbaustein (2) (Slave) und dem weiteren Mikroprozessorbaustein (17) Master möglich sind.

4. Elektronisches Regelgerät nach einem der Ansprüche 1 bis 3, mit

g) einer Reihe benachbart angeordneter Anzeigeelemente als Bestandteil einer Anzeigevorrichtung, die bei entsprechender Ansteuerung ein Lichtsignal abgeben, wobei

g1) die Reihe zur Kennzeichnung des jeweils angewählten Regelparameters dient, **dadurch gekennzeichnet, daß**

h) weitere Reihen von Anzeigeelementen (6,7,8,10) vorhanden sind, mit denen

h1) der Wert des jeweils angewählten Regelparameters und

h2) die Werte der Prozeßgrößen angezeigt werden können.

## Claims

1. Electronic regulating device having

a) a front plate unit (1), on which

b) control elements (11-13) are arranged, which serve to effect

b1) an incremental change of process variables in the regulating device,

b2) a stepwise selection of a control parameter in the electronic regulating device and

b3) an incremental change of the values of the control parameters, and which

c) has display devices (6-10) with which

c1) the respective values of the process variables,

c2) the respectively selected control parameter and

c3) the value of the respectively selected control parameter can be displayed, characterized in that

d) the front plate unit (1) is held by means of a plug connection (4) in a releasable manner on the housing (16) of the electronic regulating device, whereby

d1) there is attached to the front plate unit (1) a microprocessor building block (2) (slave) which is electrically firmly connected to the service elements (11 to 13) and the display devices (6 to 10),

d2) this microprocessor building block (2) (slave) can be connected by means of a plug contact to the front plate unit (1) and by means of a further plug contact to a further microprocessor building block (17) (master) in the housing (16) of the electronic regulating device and

d3) all structural elements necessary for the control of the process variables are arranged in the housing (16) of the electronic regulating device together with the further microprocessor building block (17) (master) (Figure 1).

2. Regulating device according to claim 1, characterized in that

e) the inputs and outputs of the further microprocessor building block (17) (master) are electrically connected to a memory building block (19), into which

e1) the electrical signals of this microprocessor building block (17) (master) are read, whereby

e2) the memory content of this memory building block (15) is also maintained with voltage loss.

3. Electronic regulating device according to claim 1, characterized in that

f) the plug contacts are only present in such a number that connections for the production of a current supply to the front plate unit (1) and a serial data exchange between the one microprocessor building block (2) (slave) and the further microprocessor building block (17) master are possible.

4. Electronic regulating device according to one of claims 1 to 3, having

g) a series of display elements arranged adjacent to one another as component of a display device, which emit a light signal with corresponding control, whereby

g1) the series serves to characterize the respectively selected control parameter, characterized in that

h) further series of display elements (6, 7, 8, 10) are present, with which

> h1) the value of the respectively selected control parameter and
>
> h2) the values of the process variables can be displayed.

## Revendications

1. Appareil électronique de régulation, avec

a) une unité (1) à plaque frontale, sur laquelle

b) sont disposés des éléments de commande (11-13) qui servent

> b1) à une modification incrémentielle des grandeurs de processus dans l'appareil de régulation,
>
> b2) à une sélection pas-à-pas d'un paramètre de régulation dans l'appareil électronique de régulation, et
>
> b3) à une modification incrémentielle des valeurs des paramètres de la régulation, et qui

c) comporte des dispositifs indicateurs (6-10), a l'aide desquels

> c1) les différentes valeurs des grandeurs de processus,
>
> c2) les paramètres de régulation choisis, et
>
> c3) la valeur du paramètre de régulation choisi, peuvent être indiqués, caractérisé par le fait que

d) l'unité à plaque frontale (1) est maintenue, à l'aide d'une liaison à enfichage (4), de façon détachable, sur le boîtier (16) de l'appareil électronique de régulation, la réalisation étant telle que

> d1) sur l'unité à plaque frontale (1) est fixé un module à microprocesseur (2) (esclave) qui est relié fermement et électriquement aux éléments de commande (11 à 13) et aux dispositifs d'affichage (6 à 10),
>
> d2) ce, module de microprocesseur (2) (esclave) est susceptible d'être relié par l'intermédiaire d'un contact à enfichage à l'unité à plaque frontale (1) et par l'intermédiaire d'un second contact à enfichage à un second module à microprocesseur (17) (maître) prévu dans le boîtier (16) de l'appareil électronique de régulation, et
>
> d3) dans le boîtier (16) de l'appareil électronique de régulation sont disposés, avec le second module à microprocesseur (16) (maître), tous les composants qui sont nécessaires pour la régulation des grandeurs de processus (figure 1).

2. Appareil de régulation selon la revendication 1, caractérisé par le fait que

e) les entrées et les sorties du second module à microprocesseur (17) (maître) sont reliées électriquement avec un module de mémoire (19) dans lequel

> e1) sont inscrits les signaux électriques de ce module à microprocesseur (17) (maître),
>
> e2) le contenu de la mémoire de ce module à mémoire (16) étant maintenu même en cas de défaillance de la tension.

3. Appareil électronique de régulation selon la revendication 1, caractérisé par le fait que

f) les contacts par enfichage ne sont prévus qu'en un nombre qui est tel que sont possibles des liaisons servant à établir une alimentation en courant de l'unité (1) à plaque frontale et un échange sériel de données entre le module à microprocesseur (2) (esclave) et le second module à microprocesseur (17) (maître).

4. Appareil élecrtronique de régulation selon l'une des revendications 1 à 3, avec

g) une série d'éléments indicateurs disposés dans le voisinage les uns des autres et constituant une partie d'un dispositif indicateur qui émettent, lors d'une attaque correspondante, un signal lumineux,

g1) la série servant à caractériser le paramètre de régulation choisi.

caractérisé par le fait que

h) d'autres séries d'éléments indicateurs (6, 7, 8, 10) sont prévues, à l'aide desquelles

> h1) la valeur du paramètre de régulation qui a été choisie et
>
> h2) les valeurs des grandeurs de processus peuvent être affichées.

EP 0 066 532 B2

# FIG 1

# FIG 2